# EUROPEAN PATENT SPECIFICATION

(11) **EP 0 948 559 B1**
(45) Date of publication and mention of the grant of the patent: **20.03.2002**
(21) Application number: 97950320.8
(22) Date of filing: 23.12.1997
(51) Int. Cl.: C08J 9/26, C08L 1/02

(54) **CELLULOSE SPONGES**
CELLULOSESCHWÄMME
EPONGES EN CELLULOSE

(30) Priority: 24.12.1996 GB 9626894
(43) Date of publication of application: 13.10.1999
(60) Divisional application: 01121333.7
(73) Proprietor: TENCEL LIMITED, Spondon, Derby DE21 7BP (GB)
(72) Inventor: ASKEW, Gregory, James, Coventry CV6 6FW (GB); BAHIA, Hardev, Singh, Coventry CV6 4JA (GB); FOXALL, Christopher, Walter, Coventry CV2 4EL (GB); LAW, Stephen, john, Warwickshire CV11 6JD (GB); STREET, Heather, Coventry CV3 5AG (GB)
(74) Representative: Manaton, Ross Timothy
(86) International application number: GB9703534
(87) International publication number: WO9828360

(56) References cited:
- EP-A- 0 418 151
- EP-A- 0 670 344
- WO-A-95/11261
- WO-A-97/23552
- WO-A-97/42259
- US-A- 3 382 303

## Description

This invention relates to cellulose sponges and to methods for the manufacture of cellulose sponges.

It is well known to produce sponges from cellulose via the viscose or xanthate process. Such a method of making sponges is described in US-A-3,382,303, and in EP-A-0,670,344.

However, the xanthate process for the manufacture of regenerated cellulose is being superseded by a process in which cellulose articles are formed from a solution of cellulose in an aqueous tertiary amine N-oxide solvent which is regenerated in an aqueous regeneration bath. Such a process is described in US-A-4,246,221.

WO 97/23552 describes and claims a process for the manufacture of a cellulose sponge, characterised in that a solution of cellulose in an aqueous tertiary amine oxide is mixed with a pore former and a foaming agent and subjected to conditions resulting in decomposition of the foaming agent and the foaming of the cellulose solution, whereafter the foamed cellulose solution is brought into contact with water in order to precipitate the cellulose.

WO 97/42259 describes and claims a method for manufacturing alveolate cellulose products from a cellulose raw material, characterised in that it comprises dissolving at least partially the said cellulose raw material in an intrinsic solvent; incorporating under agitation into the resulting mixture an effective amount of at least one pore-forming agent; the said pore-forming agent(s) compatible with the cellulose mixture being suitable for generating, when their action develops, a macro- and micro-porosity; gelling the consistent homogeneous mass thus obtained, treating the said gelled mass under conditions where the dissolved cellulose precipitates and the action of the pore-forming agent(s) present develops.

According to the present invention there is provided a cellulose sponge formed from coagulated cellulose solution, the cellulose having a mean degree of polymerisation (DP) which does not exceed 800, characterised in that the cellulose has undergone etherification with a maximum degree of substitution of 0.36.

Preferably, the degree of polymerisation is less than 600, and it more preferably lies in the range 450-600. This provides optimum water retention whilst still maintaining acceptable physical properties for the sponge material.

The sponge may be reinforced by discontinuous fibres, preferably cellulose fibres (for example lyocell, viscose or cotton fibres), having lengths selected from a range of 1 to 10mm. Lyocell fibres having an initial length of 8mm are particularly suitable, with the concentration of fibres being in the range 10-50% by weight, based on the weight of cellulose.

Preferably the sponge is treated with a wetting agent or softener, such as polyethylene glycol (PEG), preferably PEG 400.

Alternatively or additionally, the sponge may include a surfactant or a mixture of surfactants, such as a coconut oil grafted with polyethylene glycol and lauric diethanolamide, the surfactant (or mixture) being added to the cellulose solution prior to coagulation.

The cellulose is partially etherified, up to 0.36, more preferably up to 0.3, for improvement of the water retention of the sponge. Preferably, the etherification is by way of either carboxymethylation or carboxyethylation.

Also according to the invention,there is provided a method of manufacture of a cellulose sponge, characterised in that etherified cellulose having a maximum degree of substitution of 0.3 is dissolved in an amine oxide solvent to form a solution, which solution is mixed with at least one additive which is dispersed throughout the solution prior to regeneration thereof, the additive providing sites for the formation of cells within the cellulose solution as it is regenerated, wherein the degree of polymerisation of the cellulose in solution does not exceed 800.

Preferably the degree of polymerisation is in the range 450-600.

Preferably the additive is a water soluble material that can be washed out of the cellulose solution as it regenerates. The additive can be a water soluble inorganic salt, such as sodium chloride or sodium sulphite. In particular, with sodium chloride, the quantity of additive can be up to 80 times by weight, based on the cellulose in solution. Alternatively, the additive can be a water soluble organic material which is not soluble in the cellulose solution, such as polyethylene glycol (PEG). The soluble organic material may have a molecular weight in the range 1000-4000, preferably in the range 1500-3500, and may be used in quantities of 700%-2000% based on the weight of cellulose.

The cellulose solution may be caused to foam by the use of a chemically activated foaming agent, for example sodium bicarbonate, which may be mixed into the cellulose solution immediately prior to regeneration in amounts in the range 50%-500% by weight of cellulose, preferably about 100% to 120% by weight of cellulose.

Citric acid may be added directly to the dope, preferably in an amount in the range 100%-120%, by weight of cellulose. The cellulose dope may be regenerated in an aqueous citric acid solution.

The bicarbonate can be activated in a regeneration bath by the use of 10% by weight of citric acid in solution in the aqueous regeneration bath.

Preferably the bath has a temperature of 40-50°C.

A further alternative is the use of a physical blowing agent, such as a gas or volatile liquid, which can be mixed into the cellulose solution under pressure, say in an extruder, and which expands as the solution exits the extruder.

Preferably, whilst still wet or in a never dried condition, the cellulose sponge is placed in a solution of a wetting agent, preferably 20% PEG 400, to improve its water retention properties after drying.

Alternatively, whilst still in the wet or never-dried condition, the water retention properties can be improved by boiling the cellulose sponge in a solution of sodium chloride, initially a 10% solution, for 30 minutes and then washing.

The tensile properties of the sponge may be improved by immersing the never-dried sponge in an aqueous emulsion of natural rubber latex and then drying the impregnated sponge.

The water retention properties of the sponge may be further improved by etherification of the cellulose, preferably by carboxymethylation. The cellulose pulp is subjected to etherification up to a maximum degree of substitution of 0.36 before being dissolved in the amine oxide solvent, and then being subjected to the foaming process.

The invention will hereinafter be described in more detail by way of example only, with reference to the following practical examples and tests.

### Preparation of Cellulose Solution

Cellulose solutions were prepared in 200 g batches, starting from a mixed solvent comprising 80% by weight N-methyl-morpholine-N-oxide (NMMO) and 20% by weight water. The solvent and a desired amount of cellulose pulp were subjected to 10⁻² mbar (1N.m⁻²) vacuum and heated to 90°C to 95°C to remove water, so that the solution comprised a desired percentage of cellulose in a mixed solvent comprising approximately 85% by weight NMMO and 15% by weight of water.

The mixture was stirred every half hour until no pulp fibre was observed through a 100x optical microscope.

Porosity promoters or foaming agents and reinforcing fibres were added to the cellulose solution immediately prior to casting or extrusion. With the cellulose solution at about 85°C-95°C, the fibres and additive were mixed in by hand using a spatula and stirring until a homogeneous mixture was obtained.

### Regeneration

Each cellulose solution was cast onto a temperature conditioned glass plate to a thickness of 1mm. The glass plate was then immersed in a regeneration bath containing water at a desired temperature for several hours. The content of the bath was changed regularly to avoid the build up of materials leached into the water.

The regenerated cellulose sponge samples were of varying thickness.

### Reinforcing Fibre

The reinforcing fibres comprised cotton (2mm), viscose (5mm) and lyocell (10mm). (The fibre lengths are the lengths prior to milling.) The fibres were milled at the fastest speed setting on a Kenwood blender model BL360 for at least one minute until a fluffy pulp was obtained.

### Foaming Additives

A number of different additives were added to the cellulose solutions. The additives essentially comprise:-
(a) additives that could be leached out of the regenerating cellulose to produce a cellular structure. These were essentially (i) inorganic salts having a high solubility in water, and which are solid at about 85-90°C, such as sodium chloride and sodium sulphite, and (ii) organic solids which are insoluble in the cellulose solution at 85-90°C, e.g. polyethylene glycols (PEG) such as PEG 1500 and PEG 3500, (which have average molecular weights of 1500 and 3500 respectively);
(b) Chemical blowing agents which can be activated at about 20-50°C, for example sodium bicarbonate, which is activated by the addition of 10% by weight citric acid to the regeneration bath water held at a selected temperature.

### Water Holding Capacity

The water holding capacity of the sponge materials was measured as follows:-

Residue water was removed from the regenerated samples by contact with tissue whilst taking care not to squeeze the sponge. The sample was weighed wet and then left to dry at ambient temperature for several days until a constant weight was obtained. Alternatively, the samples may be dried at 95°C until a constant weight is obtained. The difference between the wet and dry sample weights divided by the dry sample weight indicates the percentage water content of a never-dried sample.

Following drying, the sponges were immersed in water for at least 24 hours, and preferably for two days, and then weighed as before. The difference between the wet sample weight and the dry mass of the sponge, divided by the dry weight indicates the percentage water content on rewetting.

### Softening or Wetting Agents

A selection of samples of cellulose sponge were soaked for 24 hours in 20% solution of PEG 400 in water and then dried at room temperature and rewetted. Their subsequent water retention capacities were compared with those of never-dried sponges and of dried sponges without the PEG 400 treatment.

The invention will now be illustrated by way of example, with reference to the Examples given below.

In the Examples which follow, LV indicates a low viscosity cellulose having a mean Degree of Polymerisation (DP) of about 485, HV indicates a high viscosity cellulose and LV/HV indicates a blend of low viscosity cellulose and high viscosity cellulose having a mean Degree of Polymerisation (DP) of about 600.

The effect of regeneration temperature and degree of polymerisation is shown below in Table A.

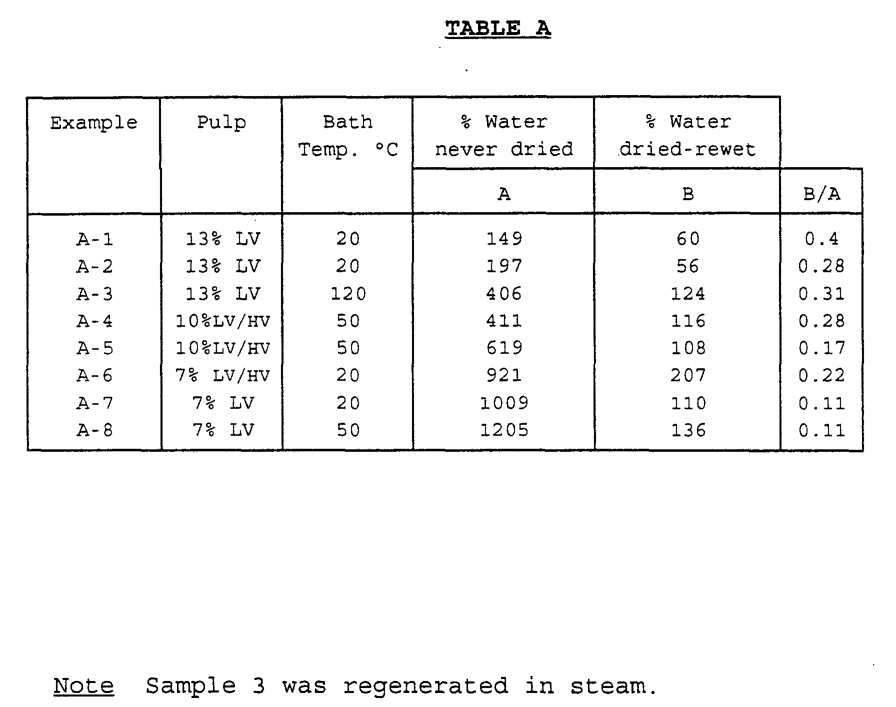

From the Examples in Table 'A' it can be seen that as the regeneration bath temperature is increased to 50°C, the porosity of the cellulose increases (see samples A-1 and A-2 compared with sample A-3, and sample A-8 compared with samples A-6 and A-7).

Furthermore, as the concentration of cellulose in the solution decreases, the porosity increases (see samples A-1 and A-7), and as the degree of polymerisation decreases the capacity for water retention of the cellulose increases.

### The Formation of Sponges using Leaching Techniques

Further cellulose sponge samples were produced and tested, as showin in Table B below:

**TABLE B**

| Examples | Pulp | Bath Temp °C | Additive | Lyocell Reinforcement | % Water never dried | % Water dried - rewet |
|---|---|---|---|---|---|---|
| B - 1 | 5% LV/HV | 50 | 420% NMMO | 56% | 870 | 66 |
| B - 2 | 10% LV | 50 | 1000%Na₂SO₃ | | 995 | 127 |
| B - 3 | 7% LV/HV | 50 | 1500% NaCl | | 1470 | |
| B - 3a | 6% LV/HV | 20 | 8000% NaCl | | 2080 | 800 |
| B - 4 | 5% LV/HV | 50 | 700% PEG | 28% | 718 | 124 |
| B - 5 | 5% LV/HV | 50 | 1400% PEG | 28% | 940 | 183 |
| B - 6 | 5% LV/HV | 50 | 1400% PEG | | 1040 | 140 |
| B - 7 | 7% LV/HV | 25 | 1500% PEG | | 1270 | 220 |
| B - 8 | 5% LV/HV | 40 | 1500% PEG | 50% | 1660 | 242 |
| B - 9 | 2% LV/HV | 50 | 1750% PEG | | 1820 | 257 |

If a sponge is arbitrarily defined as a porous material which can hold approximately 1000% or more of its weight of water then it can be seen from samples B-2 or B-3 that sponges can be formed using inorganic salts. It was observed that the cellulose solution tended to dry on addition of huge amounts of inorganic salts. In particular, the mixture of cellulose dope with sodium chloride in Example 3a produced a dough formed in a ½ cm thick slab which was regenerated in cold water (at room temperature of about 20°C) for 3 hours. Hot water, e.g. 50°C, was found to be unsuitable. For complete regeneration and leaching out of the sodium chloride the microporous sponge was boiled in hot water for about 1 hour. The resultant sponge had high water retention.

All PEG samples were made using 1500 mw PEG except for B-5, where 3500 mw PEG was used. It was observed that the greater the volume of PEG added in the cellulose solution, the greater the void volume generated in the sponge.

It was found that the upper limit of PEG that could be added to the cellulose solution was about 1800% by weight with fibre reinforcement present. The reduction in the cellulose content of the solution aided the inclusion of the larger volumes of PEG. The lower molecular weight PEG is more effective at creating pores than the high molecular weight PEG (see B-5 and B-6).

The preferred sample B-9 was able to retain a significant amount of water, up to approximately 1800%, in the never-dried state.

### The Use of Bicarbonate Foaming Agents

Table C below illustrates the results of tests of further cellulose sponges, manufactured using a bicarbonate foaming agent:

**TABLE C**

| Example | Pulp | Bath Temp. °C | Bicarbonate % | Reinforcer | % Water never dried | % Water dried-rewet |
|---|---|---|---|---|---|---|
| | | | | | A | B |
| C-1 | 13% LV | 50 | 100 | | 615 | 101 |
| C-2 | 13% LV | 50 | 200 | | 677 | 122 |
| C-3 | 10% LV | 20 | 100 | | 680 | 128 |
| C-4 | 10% LV | 50 | 100 | | 731 | 122 |
| C-5 | 7% LV/HV | 20 | 100 | | 820 | 88 |
| C-6 | 7% LV/HV | 50 | 100 | 28% cotton | 830 | 134 |
| C-7 | 7% LV/HV | 20 | 100 | 28% viscose | 930 | 206 |
| C-8 | 7% LV/HV | 20 | 100 | 28% cotton | 1000 | 138 |
| C-9 | 3% LV/HV | 50 | 117 | 210% lyocell | 1100 | 200 |
| C-10 | 3% LV/HV | 50 | 47 | 117% lyocell | 1150 | 108 |
| C-11 | 7% LV | 20 | 100 | | 1156 | 138 |
| C-12 | 7% LV/HV | 50 | 100 | | 1170 | |
| C-13 | 3% LV/HV | 50 | 70 | 117% lyocell | 1250 | 176 |
| C-14 | 7% LV | 50 | 100 | | 1282 | 156 |
| C-15 | 7% LV/HV | 50 | 100 | 28% viscose | 1380 | 91 |
| C-16 | 3% LV/HV | 50 | 117 | 117% lyocell | 1460 | 214 |
| C-17 | 7% LV | 50 | 100 | | 1609 | 270 |
| C-18 | 3% LV/HV | 30 | 466 | 70% lyocell | 2200 | 120 |
| C-19 | 3% LV/HV | 50 | 117 | 47% lyocell | 2289 | 183 |
| C-20 | 10% LV/HV | 40 | 200 | 20% lyocell | 1215 | 329 |

Generally, the more bicarbonate added to the cellulose solution the greater the water retention, up to an addition of about 120% by weight of cellulose (C-10, C-13, C-16). Above about 120% the cellulose foam structure tended to collapse. A regeneration bath temperature of about 50°C was found to be beneficial.

The greater void volumes are produced when the bicarbonate is used in combination with reinforcing fibres (see C-5, C-7 and C-8).

Good porosity of the sponge depends on a balance being struck between the cellulose content of the solution, the reinforcing fibre content, and the amount of bicarbonate present. For example, the presence of excess fibres hinders the foaming process. Sample C-19 produced optimum porosity with a relatively small amount of both bicarbonate and reinforcing fibres. The higher the cellulose content in solution the better the percentage water retention on rewetting.

### Water Softener or Wetting Agent Application

Various samples from Tables B and C were tested for the effect of a 20% PEG wash upon their water retention properties, and the results are set out in Table D below:

**TABLE D**

| Example | % Water Never-dried | % Water Dried-Rewetted (20% PEG wash) | % Water Dried-rewet Without PEG |
|---|---|---|---|
| B-1 | 870 | 520 (60%) | 65 (7%) |
| | | | |
| B-6 | 1040 | 690 (66%) | 140 (13%) |
| B-7 | 1270 | 1040 (82%) | 220 (17%) |
| B-9 | 1820 | 1650 (91%) | 255 (14%) |
| | | | |
| C-13 | 1250 | 1060 (85%) | 175 (14%) |
| C-16 | 1460 | 940 (64%) | 215 (15%) |
| C-19 | 2290 | 1515 (66%) | 185 (8%) |

(The figures in brackets denote the percentage water content of the never dried product).

The subsequent water retention capacities of the sponges treated within PEG were found to be greatly increased compared with the dried-rewet capacities of the original sponges. However, the effect of the wetting agent was observed to deteriorate with subsequent washing.

### Etherification

The cellulose was partially derivatised to give partial Carboxymethyl Cellulose (CMC) substitution.

### Method of Carboxymethylation

Blended LV and HV Viscokraft pulps with a mean DP of 600 were treated with a solution of sodium hydroxide and stirred for 40 minutes to form the 'alkcell'. To this, a solution of sodium monochloroacetate (SMCA) in water was added. Low substitution levels were obtained by slowing the reaction rate by jacketing the reaction vessel with iced water. After a time samples were neutralised with very dilute hydrochloric acid. Water was used for washing, being removed by wringing the samples in a muslin sheet. The dry samples were submitted for a sulphate ash test to determine the degree of substitution (DS). Conditions for obtaining a particular DS are tabulated in the Table E below for reactions on 50g of LV/HV pulp.

**TABLE E.**

| **Carboxymethylation Reaction Conditions** | | | | |
|---|---|---|---|---|
| CMC DS | Time (mins) | Temp. °C | % NaOH cm³ | % SMCA cm³ |
| 0.016 | 40 | 5 | 30 250 | 30 250 |
| 0.021 | 60 | 5 | 20 250 | 20 250 |
| 0.035 | 120 | 5 | 30 250 | 30 250 |
| 0.046 | 180 | 5 | 30 250 | 30 250 |
| 0.059 | 2 | 110 | 50 250 | 50 250 |
| 0.136 | 10 | 110 | saturated 250 | saturated 250 |
| 0.214 | 20 | 110 | saturated 250 | saturated 250 |
| 0.295 | 30 | 110 | saturated 250 | saturated 250 |

### Formation of CMC Sponges

7% cellulose solutions or dopes were prepared, using the above carboxymethylated samples, in the manner previously discussed on page 4.

The cellulose dope at 95°C was then mixed with 100% citric acid (based on weight of cellulose) and allowed to stand for 5 minutes. It has been found that the addition of citric acid to the dope improves the water retention of the sponges. 100% sodium bicarbonate and 28% by weight of viscose fibres were then added to the dope which was allowed to rest for a further 5 minutes. The activated dope was then cast onto a glass surface to form a sponge pad after regeneration. The sponges were formed by regeneration in 10% aqueous citric acid solution at 50°C. This is very similar to sample C-15.

The water retention properties of the CMC sponges are given in Table F.

**TABLE F.**

| **Sponges from Carboxylated Cellulose** | | | | |
|---|---|---|---|---|
| SAMPLE | Degree of Substitution by Carboxymethyl | % Water 'never-dried' A | % Water dried-rewetted B | % 'Never-dried' recovered B/A |
| F-1 | 0.016 | 1800 | 320 | 18 |
| F-2 | 0.021 | 1460 | 270 | 19 |
| F-3 | 0.035 | 1600 | 310 | 19 |
| F-4 | 0.046 | 2050 | 450 | 22 |
| F-5 | 0.059 | 2370 | 400 | 17 |
| F-6 | 0.136 | 2480 | 635 | 26 |
| F-7 | 0.214 | 2765 | 580 | 21 |
| F-8 | 0.295 | 2450 | 560 | 23 |

It can be seen that as more cellulose hydroxyl groups are substituted by carboxymethyl groups, up to substitution levels of 0.136/0.214, the water retention capacity increases of both the never-dried and dried sponge.

Substitution levels beyond 0.136 gave no further improvement to the water capacity of dried sponges.

### Post Regeneration Treatment with Latex

Sponges made according to Sample F-6 were allowed to dry to around 500% water content. They were then immersed in solutions of between 0.1 and 4% natural latex in water. With no further washing the sponges were dried completely in an oven at 95°C.

The latex coated sponges were tested for water retention and the results are given in Table G below:-

**TABLE G.**

| **Latex-coated Sponges** | |
|---|---|
| % Latex on Sponge | % Water Dried-rewetted |
| 0 | 635 |
| 0.11 | 560 |
| 0.29 | 597 |
| 0.36 | 605 |
| 0.46 | 686 |
| 0.55 | 702 |
| 0.88 | 483 |
| 1.4 | 304 |

Natural rubber latex solution applied to a formed sponge is dried using heat such that it coalesces into a flexible and resilient film on the cellulose surface. Latex has a strong affinity for hydrophilic surfaces and the low viscosity of solutions allows penetration into the thick sponge structures. Since latex does not become brittle or shrink even in dry environments, it helps maintain sponge porosity.

Latex was applied to the partially dried sponges (∼500% water) so that they swelled. Latex solutions of between 0.6 and 8% solids concentration were used. The weight of latex absorbed by the sponges was observed to be approximately one fifth of the latex bath concentration, eg a bath of 2.4% solids gave a sponge with 0.55% latex by weight of cellulose.

The greater the level of latex deposited in the sponge, from 0.11 to 0.55%, the greater is the sponge capacity for water after drying, up to about 700%. However the presence of latex at concentrations below 0.35% is detrimental in comparison to the sponge with no latex applied. Improvement in the sponge by applying 0.55% latex is only ∼10%. Increasing further the concentration of latex applied creates a poor never-dried product.

By using latex a small increase in absorbency may be achieved, but real advantages are likely to be increased mechanical strengths and wear resistance.

### Post-regeneration Treatment with Sodium Chloride

Never-dried sponges made as for samples F-3, F-4, F-7 and F-8 were immersed in a solution of sodium chloride (10%) and boiled for 30 minutes. The rate of evaporation was such that the salt eventually saturated the solution such that solid sodium chloride was visible. Without washing the sponge further it was dried at 95°C. The sample was weighed, then washed thoroughly to remove the residual salt.

Samples impregnated with salt were subjected to two drying/washing cycles. The first cycle was used to measure the amount of salt absorbed and the second wash to remove the residual salt before drying again. This second cycle was used to generate the 'dried-rewetting' figure.

The water retention of the salt-treated samples was then measured and the results are given in Table H below.

**TABLE H.**

| **Salt Treated Sponges** | | | | |
|---|---|---|---|---|
| | % Water 'never-dried' A | % Water dried-rewetted B | % Never-dried recovere d B/A | % Salt after 1st dry |
| CMC 0.046DS boiled | 2050 | 470 | 23 | 0 |
| 0.035DS boil in NaCl | 1645 | 860 | 52 | 200 |
| 0.046DS boil in NaCl | 2150 | 1051 | 50 | 200 |
| 0.214DS boil in NaCl | 2765 | 1120 | 40 | 150 |
| 0.295DS boil in NaCl | 2450 | 810 | 33 | 150 |

After boiling in saturated salt solution the sponges changed very little in appearance and volume through the drying and rewetting cycles. They maintained up to 52% of their never-dried capacity for water, and in two cases gave over 1000% water on dried-rewetted cellulose.

### Addition of Oils and Fatty Acids to the Cellulose Dope

Lauric diethanolamine (15% by weight of cellulose) and coconut oil with a grafted polyethylene glycol 600 (50% by weight of cellulose) were stirred into a 7% LV/HV cellulose dope similar to sample C-15 at 95°C. The dope was then treated with sodium bicarbonate as described above in relation to the manufacture of CMC sponges.

The resulting sample was compared with a similar sample dope prepared without any additive present.

Long chain additives are entrapped into the cellulose structure giving a permanent disrupting effect between cellulose chains. The treated sponge was not particularly porous, holding only 1215% its weight of water, as compared with about 1700% for the untreated sample. The water absorption is possibly hindered by the waxy nature of the additives. The treated sponge had improved absorbency after drying, retaining 27% of the 'never-dried' capacity (324% water); as compared with 17% for the untreated sample.

## Claims

1. A cellulose sponge formed from coagulated cellulose solution, the cellulose having a mean degree of polymerisation (DP) which does not exceed 800, **characterised in that** the cellulose has undergone etherification with a maximum degree of substitution of 0.36.

2. A sponge as claimed in claim 1, wherein the mean DP is less than 600.

3. A sponge as claimed in claim 1 or claim 2, wherein the cellulose sponge has undergone carboxymethylation.

4. A sponge as claimed in any one of claims 1 to 3, further including up to 0.6% by weight of natural rubber latex dispersed throughout the sponge.

5. A sponge as claimed in any one of claims 1 to 4, further including a fibre reinforcement.

6. A sponge as claimed in claim 5, wherein the fibre reinforcement is provided by lyocell fibres.

7. A sponge as claimed in claim 5 or claim 6,wherein the reinforcing fibre content does not exceed 50% by weight of the cellulose.

8. A sponge as claimed in any one of claims 1 to 7, further including a surfactant and/or wetting agent.

9. A sponge as claimed in claim 8, further including a wetting agent additive comprising polyethylene glycol or a substituted polyethylene glycol.

10. A method of manufacture of a cellulose sponge, **characterised in that** etherified cellulose having a maximum degree of substitution of 0.3 is dissolved in an amine oxide solvent to form a solution,which solution is mixed with at least one additive which is dispersed throughout the solution prior to regeneration thereof, the additive providing sites for the formation of cells within the cellulose solution as it is regenerated, wherein the degree of polymerisation of the cellulose in the solution does not exceed 800.

11. A method as claimed in claim 10, wherein said at least one additive is a water-soluble material which can be leached out of the cellulose solution in an aqueous regeneration bath.

12. A method as claimed in claim 11, wherein the water-soluble material is a hydrated inorganic salt.

13. A method as claimed in claim 12, wherein the inorganic salt comprises sodium chloride added in an amount of up to 80 times by weight on cellulose to form a dope which is subsequently regenerated in water at about 20°C.

14. A method as claimed in claim 11, wherein the soluble material is a polyethylene glycol (PEG).

15. A method as claimed in claim 14, wherein the PEG has a molecular weight of between 1500 and 3500.

16. A method as claimed in claim 15, wherein the maximum weight of PEG added to the cellulose solution is 1800% by weight of cellulose.

17. A method as claimed in claim 10, wherein said additive is a chemically reactive agent which is activated by heat or by the regeneration bath.

18. A method as claimed in claim 17, wherein the additive is a bicarbonate which is activated by the presence of acid within the dope and/or the regeneration bath.

19. A method as claimed in claim 17 or claim 18, wherein the additive comprises a mixture of sodium bicarbonate and citric acid.

20. A method as claimed in claim 18 or claim 19, wherein the regeneration bath includes citric acid in solution.

21. A method as claimed in claim 10, wherein the additive is a fluid which is mixed into the solution under pressure and which volatises or expands on the release of pressure in the regeneration bath to form a spoke.

22. A method as claimed in claim 21, wherein the fluid is an organic liquid.

23. A method as claimed in any one of claims 10 to 22, wherein reinforcing fibres are added to the solution.

24. A method as claimed in any one of claims 10 to 23, a fatty acid compound is added to the dope prior to regeneration.

25. A method as claimed in any one of claims 10 to 24, wherein the never-dried sponge after regeneration is boiled in a saturated solution of sodium chloride, and washed.

26. A method as claimed in any one of claims 10 to 25, wherein the never-dried sponge is immersed after regeneration in an aqueous emulsion of natural latex, and dried.

27. A method as claimed in any one of claims 10 to 26, wherein a polyethylene glycol softener is applied to the cellulose sponge after regeneration but prior to drying.

## Patentansprüche

1. Aus koagulierter Celluloselösung hergestellter Celluloseschwamm, wobei die Cellulose einen Durchschnittspolymerisationsgrad (DP) von höchstens 800 aufweist, **dadurch gekennzeichnet, daß** die Cellulose bis zu einem Maximalsubstitutionsgrad von 0,36 etherifiziert ist.

2. Schwamm nach Anspruch 1, bei dem der Durchschnittspolymerisationsgrad weniger als 600 beträgt.

3. Schwamm nach Anspruch 1 oder 2, bei dem der Celluloseschwamm carboxymethyliert ist.

4. Schwamm nach einem der Ansprüche 1 bis 3, der zusätzlich bis zu 0,6 Gew.-% darin verteilten natürlichen Gummilatex enthält.

5. Schwamm nach einem der Ansprüche 1 bis 4, der zusätzlich eine Faserverstärkung enthält.

6. Schwamm nach Anspruch 5, der mit Lyocellfasern verstärkt ist.

7. Schwamm nach Anspruch 5 oder 6, bei dem der Anteil an Faserverstärkung höchstens 50 Gew.-%, bezogen auf die Cellulose, beträgt.

8. Schwamm nach einem der Ansprüche 1 bis 7, der zusätzlich ein Tensid und/oder Netzmittel enthält.

9. Schwamm nach Anspruch 8, der als Netzmittel zusätzlich gegebenenfalls substituiertes Polyethylenglykol enthält.

10. Verfahren zur Herstellung eines Celluloseschwamms, **dadurch gekennzeichnet, daß** man etherifizierte Cellulose mit einem Maximalsubstitutionsgrad von 0,3 in einem Aminoxid auflöst und mit mindestens einem Zusatzstoff versetzt, den Zusatzstoff in der Lösung verteilt und danach die Lösung regeneriert, wobei der Zusatzstoff als Keimbildner für die Bildung von Zellen innerhalb der Celluloselösung bei deren Regenerierung sorgt und wobei der Polymerisationsgrad der in der Lösung enthaltenen Cellulose höchstens 800 beträgt.

11. Verfahren nach Anspruch 10, bei dem man als den mindestens einen Zusatzstoff einen wasserlöslichen, in einem wäßrigen Regenerationsbad aus der Celluloselösung auswaschbaren Stoff einsetzt.

12. Verfahren nach Anspruch 11, bei dem man als wasserlöslichen Stoff ein hydratiertes anorganisches Salz einsetzt.

13. Verfahren nach Anspruch 12, bei dem man als anorganisches Salz Natriumchlorid in bis zu 80facher Menge, bezogen auf das Gewicht der Cellulose, zugibt und anschließend die sich dabei gebildete Celluloselösung in Wasser von etwa 20°C regeneriert.

14. Verfahren nach Anspruch 11, bei dem man als löslichen Stoff Polyethylenglykol (PEG) einsetzt.

15. Verfahren nach Anspruch 14, bei dem man ein PEG mit einem Molekulargewicht zwischen 1500 und 3500 einsetzt.

16. Verfahren nach Anspruch 15, bei dem man die Celluloselösung mit höchstens 1800% PEG, bezogen auf das Gewicht der Cellulose, versetzt.

17. Verfahren nach Anspruch 10, bei dem man als Zusatzstoff ein thermisch oder durch das Regenerationsbad aktivierbares, chemisch reaktives Agens einsetzt.

18. Verfahren nach Anspruch 17, bei dem man als Zusatzstoff ein durch Gegenwart einer Säure innerhalb der Celluloselösung und/oder des Reaktionsbades aktivierbares Hydrogencarbonat einsetzt.

19. Verfahren nach Anspruch 17 oder 18, bei dem man als Zusatzstoff eine Mischung aus Natriumhydrogencarbonat und Zitronensäure einsetzt.

20. Verfahren nach Anspruch 18 oder 19, bei dem das Regenerationsbad Zitronensäure in Lösung enthält.

21. Verfahren nach Anspruch 10, bei dem man als Zusatzstoff ein Fluid unter Druck in die Lösung einmischt, das sich bei der Entspannung im Regenerationsbad unter Schwammbildung verflüchtigt oder ausdehnt.

22. Verfahren nach Anspruch 21, bei dem man als Fluid eine organische Flüssigkeit einsetzt.

23. Verfahren nach einem der Ansprüche 10 bis 22, bei dem man die Lösung mit verstärkenden Fasern versetzt.

24. Verfahren nach einem der Ansprüche 10 bis 23, bei dem man die Celluloselösung vor der Regenerierung mit einer Fettsäureverbindung versetzt.

25. Verfahren nach einem der Ansprüche 10 bis 24, bei dem man den Naßschwamm nach der Regenerierung in einer gesättigten Natriumchloridlösung kocht und wäscht.

26. Verfahren nach einem der Ansprüche 10 bis 25, bei dem man den Naßschwamm nach der Regenerierung in eine wäßrige Emulsion eines natürlichen Latex eintaucht und trocknet.

27. Verfahren nach einem der Ansprüche 10 bis 26, bei dem man den Celluloseschwamm nach der Regenerierung, aber vor dem Trocknen, mit einem Polyethylenglykol als Weichmacher ausrüstet.

## Revendications

1. Eponge cellulosique formée d'une solution de cellulose coagulée, la cellulose présentant un degré de polymérisation (DP) moyen ne dépassant pas 800, **caractérisée en ce que** la cellulose a subi une éthérification avec un degré de substitution maximal de 0,36.

2. Eponge selon la revendication 1, dans laquelle le DP moyen est inférieur à 600.

3. Eponge selon la revendication 1 ou la revendication 2, l'éponge cellulosique ayant subi une carboxyméthylation.

4. Eponge selon l'une quelconque des revendications 1 à 3, comprenant en outre jusqu'à 0,6% en poids de latex de caoutchouc naturel dispersé dans toute l'éponge.

5. Eponge selon l'une quelconque des revendications 1 à 4, comprenant en outre un renforcement fibreux.

6. Eponge selon la revendication 5, dans laquelle le renforcement fibreux est procuré par des fibres Lyocell.

7. Eponge selon la revendication 5 ou la revendication 6, dans laquelle la teneur en renforcement fibreux ne dépasse pas 50% en poids de la cellulose.

8. Eponge selon l'une quelconque des revendications 1 à 7, comprenant en outre un tensioactif et/ou un agent mouillant.

9. Eponge selon la revendication 8, comprenant en outre un additif mouillant comprenant le polyéthylèneglycol ou un polyéthylèneglycol substitué.

10. Procédé de fabrication d'une éponge cellulosique, **caractérisé en ce que** de la cellulose éthérifiée ayant un degré de substitution maximal de 0,3 est dissoute dans un solvant aminoxyde pour former une solution, laquelle solution est mélangée avec au moins un additif qui est dispersé dans toute la solution avant sa régénération, l'additif procurant des sites pour la formation de cellules dans la solution de cellulose as mesure qu'il est régénéré, dans lequel le degré de polymérisation de la cellulose dans la solution ne dépasse pas 800.

11. Procédé selon la revendication 10, dans lequel ledit au moins un additif est une substance hydrosoluble qui peut être lessivée de la solution de cellulose dans un bain de régénération aqueux.

12. Procédé selon la revendication 11, dans lequel la substance hydrosoluble est un sel inorganique hydraté.

13. Procédé selon la revendication 12, dans lequel le sel inorganique comprend du chlorure de sodium ajouté en une quantité allant jusqu'à 80 fois en poids par rapport à la cellulose, pour former une solution à filer qui est ensuite régénérée dans de l'eau à environ 20°C.

14. Procédé selon la revendication 11, dans lequel la substance soluble est un polyéthylèneglycol (PEG).

15. Procédé selon la revendication 14, dans lequel le PEG présente un poids moléculaire compris entre 1500 et 3500.

16. Procédé selon la revendication 15, dans lequel le poids maximal du PEG ajouté à la solution de cellulose est de 1800% en poids de la cellulose.

17. Procédé selon la revendication 10, dans lequel ledit additif est un agent chimiquement réactif qui est activé par la chaleur ou par le bain de régénération.

18. Procédé selon la revendication 17, dans lequel l'additif est un bicarbonate qui est activé par la présence d'acide dans la solution à filer et/ou le bain de régénération.

19. Procédé selon la revendication 17 ou la revendication 18, dans lequel l'additif comprend un mélange de bicarbonate de sodium et d'acide citrique.

20. Procédé selon la revendication 18 ou la revendication 19, dans lequel le bain de régénération comprend de l'acide citrique en solution.

21. Procédé selon la revendication 10, dans lequel l'additif est un fluide qui est mélangé dans la solution sous pression et qui se volatilise ou se dilate lorsque la pression est relâchée dans le bain de régénération pour former une éponge.

22. Procédé selon la revendication 21, dans lequel le fluide est un liquide organique.

23. Procédé selon l'une quelconque des revendications 10 à 22, dans lequel des fibres de renforcement sont ajoutées à la solution.

24. Procédé selon l'une quelconque des revendications 10 à 23, dans lequel un composé acide gras est ajouté à la solution à filer avant la régénération.

25. Procédé selon l'une quelconque des revendications 10 à 24, dans lequel l'éponge n'ayant jamais été séchée est chauffée à ébullition, après régénération, dans une solution saturée de chlorure de sodium, et lavée.

26. Procédé selon l'une quelconque des revendications 10 à 25, dans lequel l'éponge n'ayant jamais été séchée est immergée après régénération dans une émulsion aqueuse de latex naturel, et séchée.

27. Procédé selon l'une quelconque des revendications 10 à 26, dans lequel un adoucissant au polyéthylèneglycol est appliqué sur l'éponge cellulosique après la régénération mais avant le séchage.
